# EUROPEAN PATENT APPLICATION

(11) **EP 2 138 781 A1**
(43) Date of publication of application: **30.12.2009**
(21) Application number: 08158776.8
(22) Date of filing: 23.06.2008
(51) Int. Cl.: F24J 2/52, H01L 31/042

(54) **Photovoltaic solar generator and method of installing it**

(71) Applicant: Ecotecnia Energias Renovables, S.L., 08005 Barcelona (ES)
(72) Inventor: Viscasillas Muret, Josep, 08005 Barcelona (ES); Rubio Solis, Óscar, 08005 Barcelona (ES); Fiera Sanchez, Manel, 08005 Barcelona (ES)
(74) Representative: Barlocci, Anna

(57) **Abstract**

A photovoltaic solar generator comprises a stationary photovoltaic rack (1) and at least two supporting legs (21, 22) attached to said rack, wherein said rack comprises at least two photovoltaic units (12) mechanically attached to each other, each unit comprising at least two photovoltaic modules (13) fixed on a common frame (10), a sub-frame of which encloses one photovoltaic unit (12). Said frame (10) comprises a profile (11) having a lateral wall (15) which forms the perimeter of said sub-frame. The photovoltaic rack (1) with the supporting legs (21, 22) can be manufactured at an industrial plant and several racks (1) can be transported together with the legs folded to the installation site, to be readily installed just by unfolding the legs (21, 22) and fixing them to a previously prepared base.

## Description

The present invention is related to a method for installing stationary photovoltaic solar generators at an installation site, and it is also related to such a photovoltaic solar generator comprising photovoltaic modules. The term "stationary" means that the photovoltaic modules do not track the sun.

### BACKGROUND ART

Photovoltaic or solar cells are elements that convert solar light into direct electric current. A plurality of electrically connected solar cells are normally grouped in a photovoltaic module. A number of photovoltaic modules are electrically connected and mounted on one or several supporting structures to form a photovoltaic solar generator.

The supporting structure comprises a frame and some supporting legs. The supporting structure is mounted at the installation site by fixing the supporting legs to a previously prepared base, assembling the bars that form the frame, joining the frame to the supporting legs, attaching the photovoltaic modules to the frame and electrically connecting them; these steps are performed "in situ" at the installation site. The supporting structure with the photovoltaic modules is sometimes named "photovoltaic array", although it will hereinafter be named "photovoltaic rack". The photovoltaic rack also comprises electrical cables and perhaps one inverter.

Several photovoltaic racks can be mounted at the same installation site. The photovoltaic racks are electrically connected and also connected to a control unit and to the grid.

The photovoltaic racks in a photovoltaic power installation can be stationary or can track the sun movement. In the latter case energy collection is improved but the costs soar too. The present invention is related to stationary photovoltaic racks. The installation site can be on the ground or on a building.

The photovoltaic modules have their own frame, which is mechanically attached to the supporting structure frame. The size of the photovoltaic modules is not standardized and sometimes particular arrangements are required during their installation at the installation site.

The building of the photovoltaic racks at the installation site is not a very efficient operation and can be impaired by bad weather; thus it is rather expensive. Besides, such operation can last several days or weeks, during which the building elements are stored at the installation site. This makes their theft more likely and their safeguard more expensive too.

### SUMMARY OF THE INVENTION

It is an object of the present invention to provide a photovoltaic solar generator and a method for its installation that avoid the cited problems related to "in situ"assembly.

According to a first aspect of the invention, a method for installing stationary photovoltaic solar generators at an installation site comprises the steps of:
- providing a plurality of photovoltaic modules, each comprising a plurality of solar cells,
- assembling in a plant at least one stationary photovoltaic rack, by fixing at least two photovoltaic modules on a common frame,
- electrically connecting in a plant the photovoltaic modules of each photovoltaic rack,
- attaching at least two supporting legs to said photovoltaic rack through hinge means,
- loading at least one assembled photovoltaic rack on a transport means at the plant,
- transporting said at least one assembled photovoltaic rack to an installation site,
- unloading at least one assembled photovoltaic rack from said transport means at the installation site, and
- installing at least one photovoltaic rack by fixing the supporting legs thereof to an appropriate base previously prepared at the installation site.

By applying this method, the manufacturing conditions of the photovoltaic racks can be efficiently controlled, much less work has to be done at the installation site, the installation is easier to organize and depends much less on the environmental conditions, such as weather, and the theft of the photovoltaic modules and other material can be avoided.

In an embodiment, said step of assembling at least one stationary photovoltaic rack comprises first assembling at least two photovoltaic units, each formed by fixing at least two photovoltaic modules on said common frame, and then mechanically attaching said at least two photovoltaic units to each other to form the photovoltaic rack. Thus, a rack can adopt different configurations depending on the setting of the photovoltaic units forming it.

Preferably, each photovoltaic module is provided devoid of an individual module frame around its perimeter, and it is attached on said frame common to all the photovoltaic modules forming one photovoltaic unit. Using frameless photovoltaic modules lowers the cost of the photovoltaic solar generator.

In an embodiment, said step of attaching at least two photovoltaic modules on a common frame comprises gluing the modules to said common frame. The strong attachment provided by the gluing makes it impossible to steal he photovoltaic modules without breaking them.

Advantageously, said step of attaching supporting legs to the rack is also performed in an industrial plant.

In an embodiment, said supporting legs are maintained folded such that they extend substantially parallel to the plane of the photovoltaic rack during storing, loading and transport, and are unfolded to a working position after unloading at the installation site. The racks so arranged occupy a minimum space during storage and transport.

In an embodiment, said installation site is a solar park, and the base of the installation site to which the supporting legs are fixed is a foundation.

In an embodiment, said installation site is a building to which the stationary photovoltaic solar generators are attached, and the base of the installation site to which the supporting legs are fixed is a wall or roof support.

According to a second aspect of the invention, a photovoltaic solar generator comprises a stationary photovoltaic rack and at least two supporting legs attached to said rack, said rack comprising at least two photovoltaic units mechanically attached to each other, each unit comprising at least two photovoltaic modules fixed on a common frame. This allows for different configurations of the rack. The rack can be manufactured in an industrial plant and transported finished and assembled with the supporting legs to the installation site.

Preferably, each photovoltaic module is devoid of an individual module frame around its perimeter. This makes it most convenient to manufacture the photovoltaic rack in a plant.

In an embodiment, the frame of the rack comprises a profile having a lateral wall which forms the perimeter of said frame or of a sub-frame thereof. Said sub-frame can form the common frame of the photovoltaic modules of a photovoltaic unit.

Advantageously, said profile comprises a serrated surface for attaching the photovoltaic modules, so that the attachment between the photovoltaic modules and the frame may be stronger.

In an embodiment, the supporting legs comprise a first leg and a second leg, the photovoltaic rack being attached to the first leg and the second leg being hinged to the first leg. This arrangement greatly simplifies the mechanism for supporting the rack.

In an embodiment, the profile of the frame is made of aluminium or composite material.

Preferably, the photovoltaic rack comprises grip means suitable for hoisting the photovoltaic rack with a crane.

### BRIEF DESCRIPTION OF THE DRAWINGS

A particular embodiment of the present invention will be described in the following, only by way of non-limiting example, with reference to the appended drawings, in which:
figure 1 is a view of a photovoltaic rack with several photovoltaic units;
figure 2 is a view of the photovoltaic rack of figure 1 with just one photovoltaic unit, so as to illustrate the frame of the rack;
figure 3 is a cross-section of a profile for the frame of the photovoltaic rack;
figure 4 is a view from below of the photovoltaic rack; and
figure 5 is a view of several racks in folded condition.

### DESCRIPTION OF PARTICULAR EMBODIMENTS

The basic element for photovoltaic energy conversion is the solar cell. A photovoltaic module is a manufactured array of electrically connected solar cells, and it is the minimum commercial photovoltaic element. A photovoltaic module comprises a common backing (made for instance of tedlar) for supporting the solar cells, an overlying glass for protecting the solar cells, and the electrical connections between the solar cells.

A photovoltaic unit is a set of several photovoltaic modules that are grouped together for installation purposes. A photovoltaic rack comprises one or several photovoltaic units mounted on a frame; the rack is supported by some legs which are fixed to a base than can be prepared on the ground or on the roof or wall of a building. A photovoltaic rack is the minimum photovoltaic element that is installed in a photovoltaic solar generator.

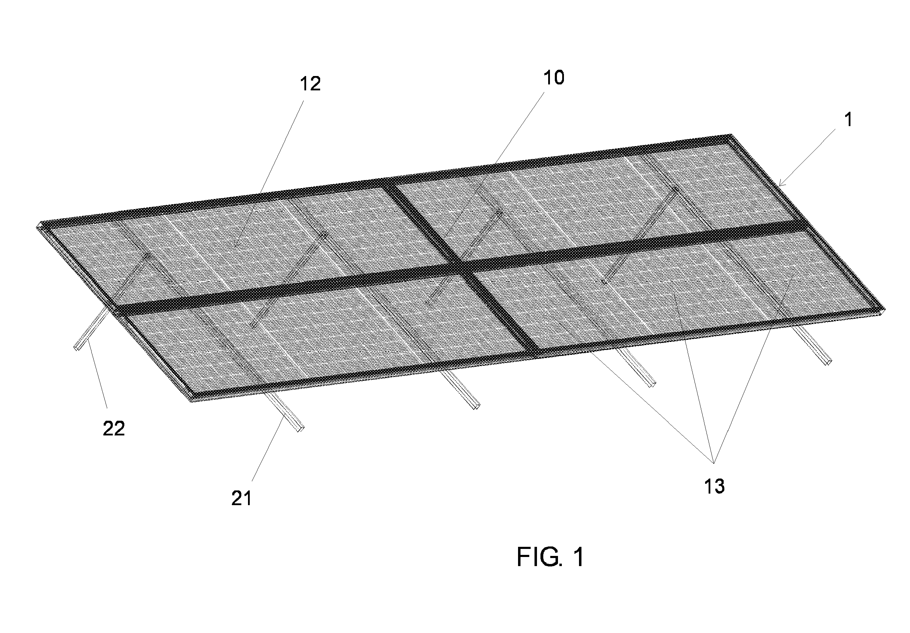

Figure 1 shows a stationary photovoltaic rack 1 and some supporting legs 21, 22 that support the rack. This photovoltaic rack comprises a frame 10 and four photovoltaic units 12. Each photovoltaic unit 12 comprises three photovoltaic modules 13.

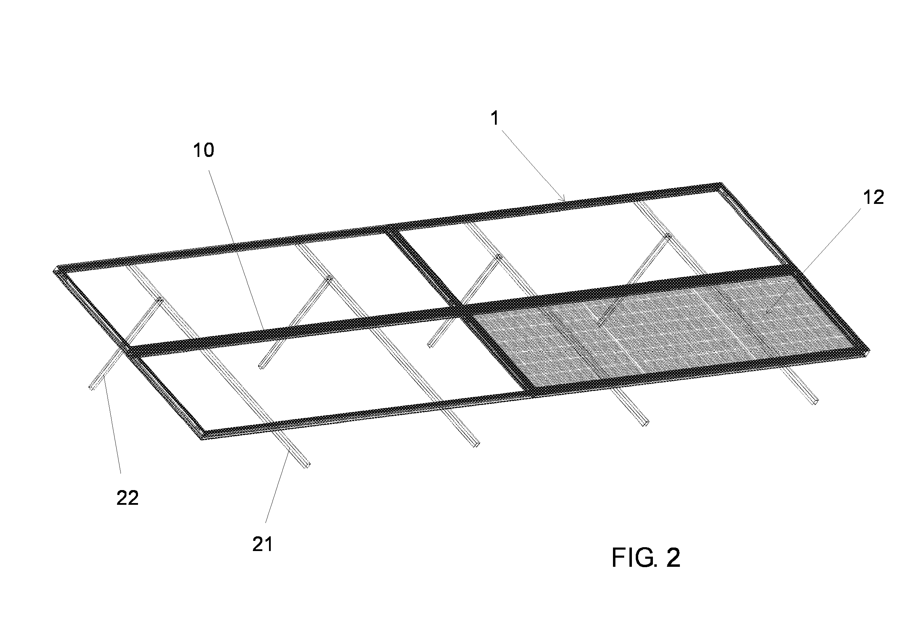

Figure 2 shows the stationary photovoltaic rack 1 and the legs 21, 22 of figure 1 but with three of the four photovoltaic units 12 cut off, in order to see more clearly the structure formed by the frame 10 and the legs 21, 22. In this embodiment, the frame 10 defines four sub-frames each of which corresponds to each photovoltaic unit and provides a common frame for the three photovoltaic modules of each photovoltaic unit; thus, said three photovoltaic modules do not have to have their own particular frame.

The supporting legs are of two types: first legs 21 and second legs 22. The first legs 21 are attached to the frame 10 and extend substantially parallel to the inclination of the rack 1 once installed. The lower end of the first legs 21 contacts the base (ground or building), providing a support for the rack. The second legs 22 are attached to the first legs 21 at the upper region thereof and extend downwardly to the base, providing another support for the rack. Neither the first legs 21 nor the second legs 22 have to be vertical or horizontal.

The second legs 22 are hinged to the first legs 21. This allows the folding of the second legs for transportation of the photovoltaic rack, which then adopts a planar configuration making it feasible to vertically put several racks together minimizing wasted volume. Each rack preferably has grip means for hoisting it with a crane.

Another advantage of hinging the second legs 22 to the first legs 21 is that the inclination of the rack can be varied when installing it, just by varying the angle of attachment of the second leg to the first leg. Thus the legs need not be telescopic. However, in some cases it could be convenient for the legs to be telescopic, specially the second legs 22.

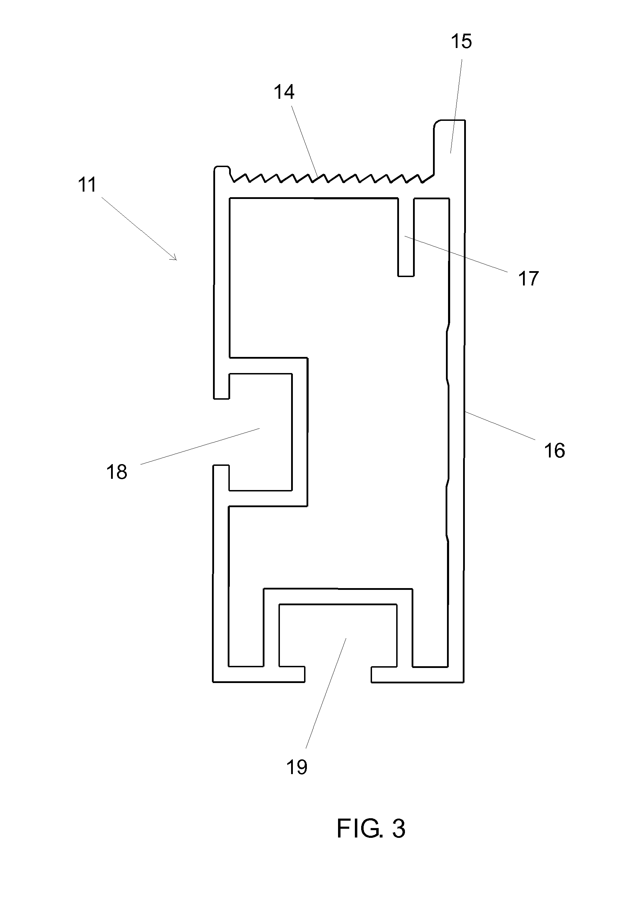

The frame 10 is made from a profile 11 (see figure 3). The legs 21, 22 are made from another profile, for example an "U" profile. The profile 11 comprises a top face 14 ad a top lateral wall 15. The photovoltaic modules 13 are fixed to the top face 14 of the profile 11 of the frame 10, for example by gluing; the top face 14 has a serrated surface so that the glue can provide a stronger attachment between the photovoltaic modules 13 and the top face 14.

The top wall 15 extends substantially perpendicular to the top face 14 and is a prolongation of an external wall 16 of the profile 11. The top wall 15 provides a common external frame to the photovoltaic modules forming a photovoltaic unit. The sub-frame that encloses each photovoltaic unit is thus formed with the profile 11, and two adjacent sub-frames of the frame 10 are separated by two profiles 11, attached back-to-back through the external wall 16.

An inner flange 17 downwardly protrudes from the inner surface of the top face 14 of the profile 11. The inner flange 17 extends substantially parallel to the external wall 16. To form the corners of the frame 10 or of sub-frame thereof, two bars having the profile 11 can be joined by linking their respective inner flanges 17 with a "L" piece. Nevertheless, two profiles 11 can be joined through other walls thereof.

The profile 11 is provided with an internal concavity 18 and a bottom concavity 19. The internal concavity 18 is formed on the wall opposite the external wall 16, and the bottom concavity 19 is formed on the wall opposite the top face 14. Each concavity forms a cavity that widens beyond a somewhat narrower opening.

The function of the internal concavity 18 is to provide a fitting for a bracket intended to carry the electric cables. The function of the bottom concavity 19 is to provide a fitting for bolts intended to fasten, with corresponding nuts, the frame 10 to the first legs 21. Said bolts should preferably have a square head somewhat narrower than the width of the cavity, in order to prevent their turning and to allow the fastening of the nuts.

The profiles 11 are made of aluminium or a composite material.

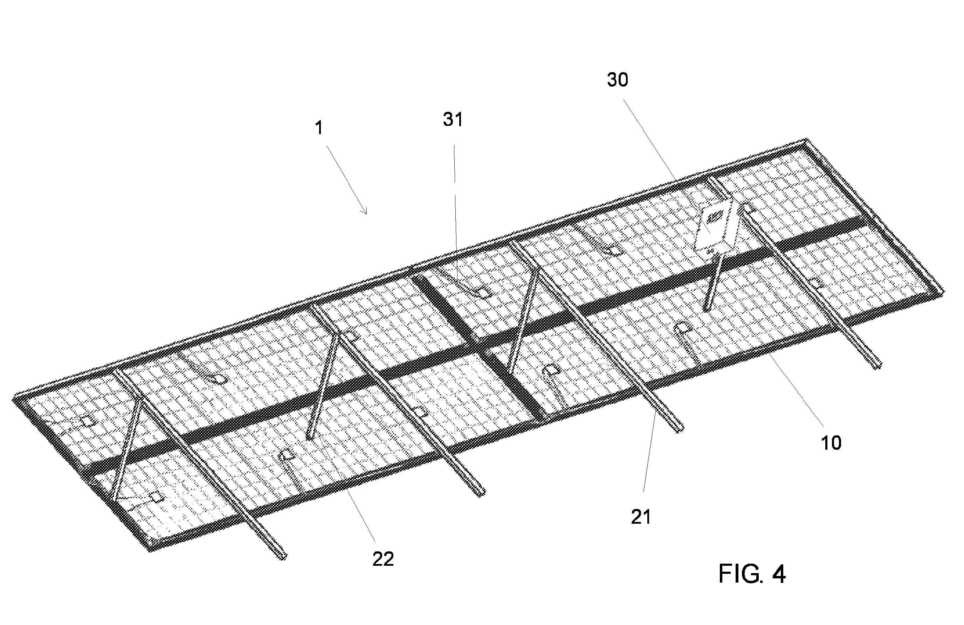

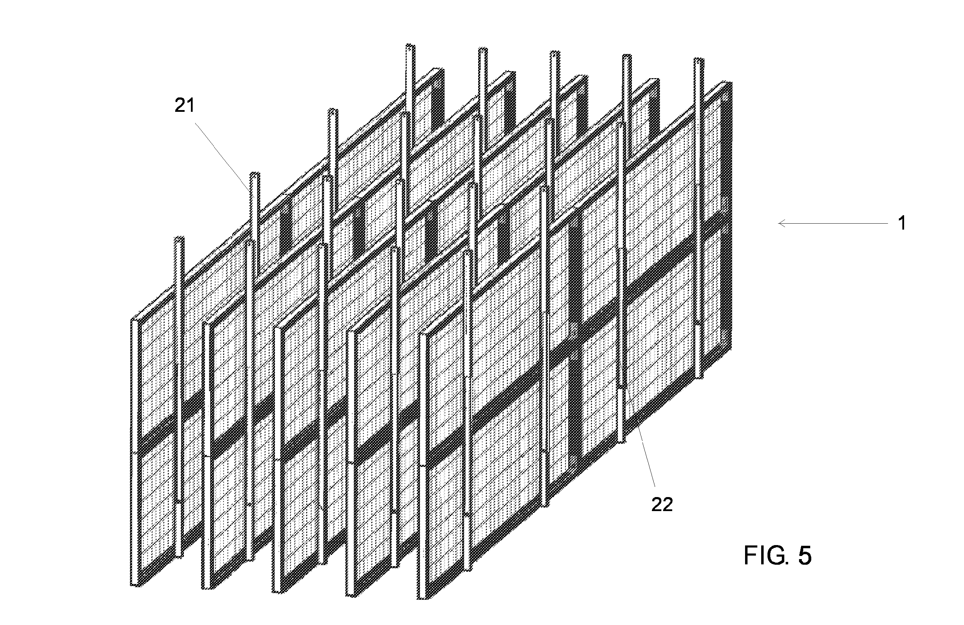

The photovoltaic rack 1 with the supporting legs 21, 22 can be manufactured at an industrial plant and several racks can be transported together to the installation site, to be readily installed just by fixing the legs to the previously prepared base. The rack can be completed at the plant because the profile 11 facilitates assembling frameless photovoltaic modules 13 into photovoltaic units 12 mounted on the frame 10, and incorporating cables 31 and inverters 30 to the rack 1 (see figure 4), and also because the legs can be folded for transportation. Figure 5 shows several racks in folded condition ready for transportation.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

For example, instead of glued the photovoltaic modules can be bolted to the frame 10.

Or some operations of the manufacturing of the photovoltaic racks can be automated in an assembly line.

## Claims

1. A method for installing stationary photovoltaic solar generators at an installation site, comprising the steps of:
- providing a plurality of photovoltaic modules (13), each comprising a plurality of solar cells,
- assembling in a plant at least one stationary photovoltaic rack (1), by fixing at least two photovoltaic modules (13) on a common frame (10),
- electrically connecting in a plant the photovoltaic modules (13) of each photovoltaic rack (1),
- attaching at least two supporting legs (21, 22) to said photovoltaic rack (1) through hinge means,
- loading at least one assembled photovoltaic rack (1) on a transport means at the plant,
- transporting said at least one assembled photovoltaic rack (1) to an installation site,
- unloading at least one assembled photovoltaic rack (1) from said transport means at the installation site, and
- installing at least one photovoltaic rack (1) by fixing the supporting legs (21, 22) thereof to an appropriate base previously prepared at the installation site.

2. A method as claimed in claim 1, wherein said step of assembling at least one stationary photovoltaic rack (1) comprises first assembling at least two photovoltaic units (12), each formed by fixing at least two photovoltaic modules (13) on said common frame (10), and then mechanically attaching said at least two photovoltaic units (12) to each other to form the photovoltaic rack (1).

3. A method as claimed in claims 1 or 2, wherein each photovoltaic module (13) is provided devoid of an individual module frame around its perimeter, and it is attached on said frame (10) common to all the photovoltaic modules (13) forming one photovoltaic unit (12).

4. A method as claimed in any of the preceding claims, wherein said step of attaching at least two photovoltaic modules (13) on a common frame (10) comprises gluing the modules to said common frame.

5. A method as claimed in any of the preceding claims, wherein said step of attaching supporting legs (21, 22) to the rack (1) is also performed in a plant.

6. A method as claimed in claim 5, wherein said supporting legs (21, 22) are maintained folded such that they extend substantially parallel to the plane of the photovoltaic rack (1) during storing, loading and transport, and are unfolded to a working position after unloading at the installation site.

7. A method as claimed in any of the preceding claims, wherein said installation site is a solar park, and the base of the installation site to which the supporting legs (21, 22) are fixed is a foundation.

8. A method as claimed in any of claims 1 to 6, wherein said installation site is a building to which the stationary photovoltaic solar generators are attached, and the base of the installation site to which the supporting legs (21, 22) are fixed is a wall or roof support.

9. A photovoltaic solar generator comprising a stationary photovoltaic rack (1) and at least two supporting legs (21, 22) attached to said rack, wherein said rack comprises at least two photovoltaic units (12) mechanically attached to each other, each unit comprising at least two photovoltaic modules (13) fixed on a common frame (10).

10. A photovoltaic solar generator as claimed in claim 9, wherein each photovoltaic module (13) is devoid of an individual module frame around its perimeter.

11. A photovoltaic solar generator as claimed in claims 9 or 10, wherein the frame (10) of the rack (1) comprises a profile (11) having a lateral wall (15) which forms the perimeter of said frame or of a sub-frame thereof.

12. A photovoltaic solar generator as claimed in claim 11, wherein the profile (11) comprises a serrated surface (14) for attaching the photovoltaic modules (13).

13. A photovoltaic solar generator as claimed in any of claims 9 to 12, wherein the supporting legs comprise a first leg (21) and a second leg (22), the rack (1) being attached to the first leg (21) and the second leg (22) being hinged to the first leg (21).

14. A photovoltaic solar generator as claimed in any of claims 9 to 13, wherein the profile (11) of the frame (10) is made of aluminium or composite material.

15. A photovoltaic solar generator as claimed in any of claims 9 to 14, wherein the photovoltaic rack (1) comprises grip means suitable for hoisting the photovoltaic rack with a crane.
